# DEMANDE DE BREVET EUROPEEN

(11) **EP 1 207 580 A1**
(43) Date de publication de la demande: **22.05.2002**
(21) Numéro de dépôt: 01402885.6
(22) Date de dépôt: 09.11.2001
(51) Int. Cl.: H01M 8/04, B60K 11/02, B60L 11/18

(54) **Véhicule automobile propulsé par un moteur électrique alimenté par une pile à combustible**

(30) Priorité: 16.11.2000 FR 0014796
(71) Demandeur: Renault, 92100 Boulogne Billancourt (FR)
(72) Inventeur: Oulefki, Abdelhakim, 93300 Aubervilliers (FR); Samuel, Sébastien, 75004 Paris (FR); Rouveyre, Luc, 94100 Saint Maur des Fosses (FR)

(57) **Abrégé**

Il comprend des moyens de régulation de la température de fonctionnement de la pile (1), et des appareils consommateurs d'énergie mécanique (4a, 5a, 11, 12). Les moyens de régulation comprennent un fluide caloporteur balayant la pile (1) et circulant en boucle (B₁). La boucle (B₁) comporte une turbine (3) pour convertir une partie de l'énergie thermique transportée par le fluide en une énergie mécanique sélectivement délivrée aux consommateurs d'énergie mécanique (4a, 5a, 11, 12).

## Description

La présente invention est relative à un véhicule automobile comprenant au moins un moteur électrique de propulsion, une pile à combustible pour l'alimentation du moteur en énergie électrique, des moyens de régulation de la température de fonctionnement de la pile et des appareils consommateurs d'énergie mécanique tels que pompe, ventilateur, compresseur, etc...

On a proposé d'utiliser, dans un véhicule automobile de ce type, une pile à combustible à membrane polymère échangeuse d'ions. En fonctionnement, une telle pile produit, outre de l'électricité et de l'eau, de la chaleur qu'il convient d'évacuer quand celle-ci tend à porter la température de fonctionnement de la pile au-dessus de son domaine de fonctionnement normal (de 20 à 120°C par exemple) ou l'écarte d'une température de fonctionnement optimale, de l'ordre de 80-90°C environ par exemple. Il convient donc de prévoir, dans un tel véhicule, des moyens de régulation de la température de la pile, à une température qui peut d'ailleurs varier en fonction du mode de fonctionnement du véhicule (démarrage par temps froid ou par temps chaud, fonctionnement en régime stabilisé, notamment).

Par ailleurs, un véhicule automobile en général, et un tel véhicule à propulsion électrique alimenté par une pile à combustible en particulier, contient un certain nombre de sources d'énergie de divers types et des organes ou appareils consommateurs de ces énergies, énergie mécanique (pompes, ventilateurs, compresseurs, alternateurs), énergie électrique (actionneurs, lampes d'éclairage, composants électroniques, organes de chauffage électrique), énergie thermique (aérotherme de chauffage de l'habitacle). Ces sources et consommateurs d'énergie doivent avantageusement être gérés de façon à minimiser la consommation de la pile en combustible, notamment de manière à maximiser la distance que peut parcourir le véhicule avant qu'un réapprovisionnement en combustible devienne nécessaire.

La présente invention a donc pour but de réaliser un véhicule automobile propulsé par un ou plusieurs moteurs électriques alimentés par une pile à combustible conçu pour assurer, à la fois, une régulation optimale de la température de fonctionnement de la pile et une gestion des diverses sources et consommateurs d'énergie du véhicule, propres à minimiser la consommation en combustible de la pile.

On atteint ce but de l'invention, ainsi que d'autres qui apparaîtront à la lecture de la description qui va suivre, avec un véhicule automobile du type décrit en préambule de la présente description, comprenant notamment des moyens de régulation de la température de fonctionnement de la pile et des appareils consommateurs d'énergie mécanique, ce véhicule étant remarquable en ce que les moyens de régulation comprennent un fluide caloporteur balayant la pile et circulant en boucle, ladite boucle comportant des moyens pour convertir une partie de l'énergie thermique transportée par ledit fluide en une énergie mécanique sélectivement délivrée aux consommateurs d'énergie mécanique du véhicule.

Comme on le verra plus loin en détail, on tire ainsi de la boucle de régulation thermique de la pile, de l'énergie mécanique et, éventuellement, de l'énergie thermique exploitées dans divers consommateurs d'énergie du véhicule, au bénéfice du rendement énergétique global et, donc, de la réduction de la consommation en combustible de la pile.

Selon d'autres caractéristiques de la présente invention :
- les moyens de conversion d'énergie thermique comprennent une turbine traversée par le fluide chauffé à l'état gazeux par la pile, le fluide passant ensuite dans un condenseur disposé dans la boucle entre la turbine et la pile,
- des moyens commandent sélectivement le passage du fluide caloporteur ayant balayé la pile dans au moins une branche de la boucle court-circuitant la turbine et ledit condenseur, lors d'une phase de démarrage du véhicule,
- en phase de démarrage du véhicule par temps froid, les moyens de commande font passer le fluide caloporteur dans un aérotherme de chauffage de l'habitacle du véhicule disposé dans l'une desdites branches court-circuitant la turbine,
- des moyens sont prévus pour rafraîchir l'air de l'habitacle par temps chaud, ces moyens comprenant un compresseur et un évaporateur traversés par un fluide frigorigène circulant en boucle,
- le véhicule comprend un autre condenseur traversé, d'une part, par une branche de la boucle de fluide caloporteur court-circuitant sélectivement la turbine et d'autre part, par la boucle de fluide frigorigène, entre le compresseur et l'évaporateur,
- pendant une phase de démarrage par temps chaud du véhicule, les moyens de commande établissent une circulation du fluide caloporteur dans l'aérotherme et/ou dans ledit autre condenseur,
- en régime de fonctionnement stabilisé du véhicule, les moyens de commande établissent un soutirage du fluide circulant dans la turbine, bi-étagée, à la sortie d'un premier étage de cette turbine, le fluide soutiré passant dans ledit autre condenseur pour y être surchauffé par le fluide frigorigène comprimé, et donc chaud, qui sort du compresseur, le fluide soutiré étant ensuite renvoyé à l'entrée d'un deuxième étage de la turbine.

D'autres caractéristiques et avantages de la présente invention apparaîtront à la lecture de la description qui va suivre et à l'examen du dessin annexé dans lequel :
- la figure 1 est un schéma de la boucle de fluide utilisée pour la régulation de la température de la pile à combustible du véhicule suivant l'invention, ainsi que de consommateurs d'énergie de ce véhicule qui échangent de l'énergie avec cette boucle,
- la figure 2 représente une variante de la partie A du schéma de la figure 1,
- la figure 3 représente une variante des parties A et B du schéma de la figure 1, et
- la figure 4 représente schématiquement un mode de réalisation d'une unité de traitement d'air extérieur, conçue pour coopérer avec les moyens de régulation de température de la pile du véhicule suivant l'invention.

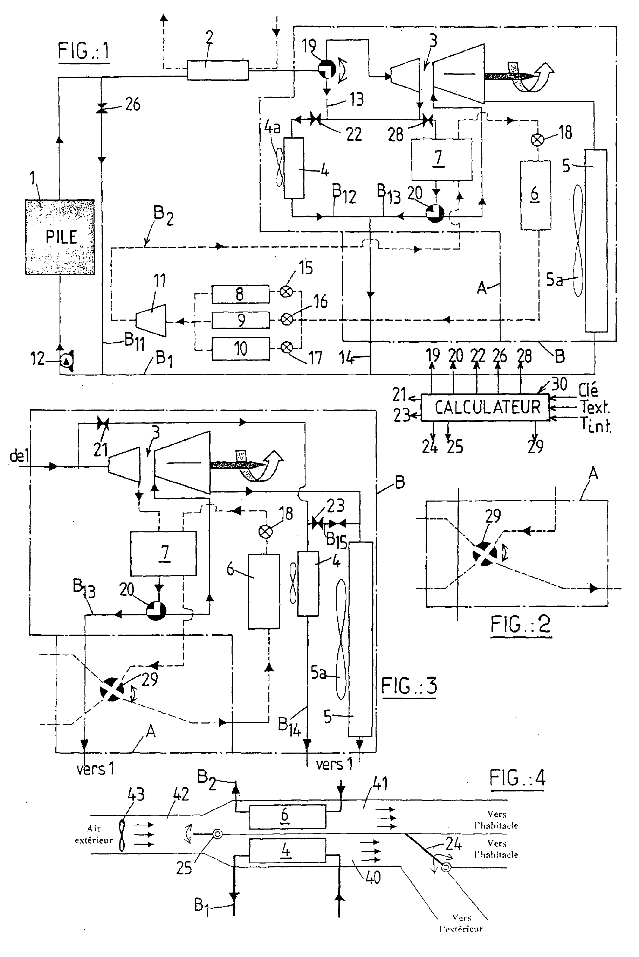

On se réfère à la figure 1 du dessin annexé où on a représenté schématiquement une pile à combustible 1, par exemple du type décrit en préambule de la présente description, et des moyens de régulation de la température de cette pile, par balayage de la pile avec un fluide caloporteur convenable circulant dans un circuit en boucle B₁ représenté en trait plein. La pile est installée dans un véhicule automobile pour alimenter un ou plusieurs moteurs électriques (non représentés) de propulsion du véhicule. L'air de l'habitacle de ce véhicule est, classiquement, chauffé par un aérotherme 4 associé à un moto-ventilateur 4a, ou rafraîchi par un évaporateur 6, formant partie d'un deuxième circuit en boucle B2 (représenté en trait interrompu) dans lequel circule un fluide frigorigène classique qui s'y détend après avoir été comprimé dans un compresseur 11.

La boucle B1 comprend essentiellement, en série, outre la pile 1, une turbine 3 et un condenseur 5 refroidi par un moto-ventilateur 5a. L'aérotherme 4 et l'évaporateur 6 pourraient être agencés, en variante, de manière à se partager un moto-ventilateur commun.

La turbine 3 est animée par le fluide vaporisé dans la pile 1 pour convertir, suivant l'invention, une partie de la chaleur transportée par ce fluide, en énergie mécanique fournie sélectivement à un ou plusieurs consommateurs d'énergie mécanique installés dans le véhicule (pompe, compresseur, ventilateur, etc...) . La vapeur sortant de la turbine est condensée dans le condenseur 5 puis renvoyée vers la pile à combustible 1 par une pompe 12. La turbine fonctionne ainsi en machine de Rankine. Elle peut ne comprendre qu'un seul étage.

La turbine 3 peut aussi, avantageusement, être bi- ou multi-étagée et comprendre une prise de soutirage intermédiaire de vapeur (comme représenté à la figure 1) pour un but que l'on expliquera plus loin.

L'énergie mécanique produite par la turbine 3 peut être utilisée pour animer un ou plusieurs consommateurs de cette énergie, telle la pompe 12 de la boucle B₁, le compresseur 11 de la boucle B₂, les moto-ventilateurs 4a et 5a, un alternateur de charge de batteries de stockage d'énergie électrique, etc...

Le fluide caloporteur chauffé par la pile 1 peut être surchauffé dans un équipement tel qu'un échangeur de chaleur 2 placé en amont de la turbine et parcouru par un autre fluide chauffé par un éventuel reformeur fournissant de l'hydrogène consommé par la pile, ou par des produits chauds d'échappement en provenance du reformeur, la nature de ces produits dépendant du type de reformage (CO, CO₂, air, etc...), ou par toute autre source de chaleur présente dans le véhicule. Ce fluide caloporteur peut être constitué par exemple, par de l'eau chlorée, de l'ammoniac, un fluide chloré, un n-butane, etc...

La boucle B₁ comprend aussi diverses branches susceptibles d'être sélectivement mises en circuit, en parallèle avec des portions de la boucle pour des buts que l'on expliquera plus loin.

C'est ainsi qu'une branche B₁₁ contenant une électrovanne 26 est montée en parallèle sur la portion de la boucle B₁ qui traverse la pile à combustible 1. Deux autres branches B₁₂ et B₁₃ traversent respectivement l'aérotherme 4 et un autre condenseur 7, sont montées en parallèle l'une sur l'autre, et en parallèle sur la portion de la boucle B₁ qui traverse la turbine 3 et le condenseur 5, entre des lignes 13 et 14 de raccordement à une vanne 19 et à l'entrée de la pompe 12, respectivement.

La vanne 19 est à trois voies et deux positions. Dans la position représentée à la figure 1, la vanne 19 dirige dans la ligne 13 le fluide vaporisé dans la pile à combustible 1. Dans son autre position, la vanne 19 dirige ce fluide directement dans la turbine 3. Des électrovannes 22 et 28 commandent sélectivement l'alimentation en vapeur des branches B₁₂ et B₁₃.

Dans le cas d'une turbine à soutirage intermédiaire telle que celle représentée à la figure 1, ce soutirage alimente la ligne 13 entre les électrovannes 22 et 28. La vapeur transmise soit par cette ligne 13, soit par ce soutirage, au condenseur 7 est renvoyée par une vanne 20 à trois voies et deux positions, soit dans la ligne 14, soit dans la turbine 3.

Les vannes 19 et 20 pourraient évidemment être remplacées chacune par deux électrovannes convenablement agencées.

La boucle B₂ suivie par le fluide frigorigène sert à rafraîchir, outre l'air de l'habitacle du véhicule, grâce à l'évaporateur 6, des appareils 8, 9, 10 de ce véhicule traversés en parallèle par ce fluide à l'aval de l'évaporateur 6 (ou placés en parallèle sur cet évaporateur) à travers des détendeurs 15, 16, 17 respectivement. A titre d'exemple illustratif et non limitatif, ces appareils 8, 9, 10 peuvent être constitués respectivement par une batterie d'accumulateurs électriques, des appareils électroniques, et le ou les moteurs électriques du véhicule lui-même. En aval de ces appareils, qui pourraient aussi être montés en série dans la boucle B₂, le fluide est de nouveau comprimé par le compresseur 11 précité avant d'être renvoyé dans l'évaporateur 6, éventuellement à travers un détendeur 18.

Suivant l'invention, avant d'arriver au détendeur 18, le fluide de la boucle B₂ traverse le condenseur 7 tout comme la branche B₁₃ de la boucle B₁, pour un but que l'on expliquera plus loin.

Le fonctionnement des deux boucles de fluide représentées à la figure 1 s'établit alors comme suit. Ce fonctionnement fait intervenir des commandes sélectives des vannes 19, 20, et des électrovannes 22, 26, 28 qui sont développées par des moyens de commande tels qu'un calculateur électronique 30 de gestion de ces deux boucles, dûment programmé à cet effet selon les règles explicitées ci-dessous.

On distinguera dans la suite trois modes de fonctionnement des boucles de la figure 1, lors d'un démarrage du véhicule par temps froid, lors d'un démarrage par temps chaud et lors d'un fonctionnement du véhicule en régime stabilisé. Ces diverses conditions de fonctionnement sont connues du calculateur 30 par des signaux délivrés par des détecteurs convenables tels qu'un détecteur de démarrage du véhicule par la rotation de la clé de contact par exemple, un détecteur de la température Tᵢₙₜ de l'air de l'habitacle, un détecteur de la température Tₑₓₜ de l'air extérieur etc...

Pendant une phase de démarrage du véhicule, la vanne 19 connecte la ligne 13 dans la boucle B₁, en isolant ainsi la turbine 3 et le condenseur 5, ce qui permet d'accélérer la montée en température de la pile. On pourra monter un clapet anti-retour (non représenté) sur la ligne de soutirage de la turbine 3 pour éviter tout refoulement de fluide vers cette turbine. Le fluide caloporteur retourne vers la pile 1 par la branche 14 et la pompe 12.

Lors d'un démarrage du véhicule par temps froid, l'air de l'habitacle est chauffé par l'air pulsé par le moto-ventilateur 4a à travers l'aérotherme 4, traversé lui-même par l'intégralité du fluide caloporteur ayant balayé la pile 1 pour la refroidir, ce qui permet d'obtenir un chauffage rapide de l'habitacle du véhicule. Les électrovannes 22 et 28 sont alors respectivement ouverte et fermée. Le condenseur 7 n'est alimenté ni par le fluide caloporteur ni par le fluide frigorigène de la boucle B₂, alors inutile (le compresseur 11 est à l'arrêt).

Lors d'un démarrage du véhicule par temps chaud, le compresseur 11 fonctionne et l'évaporateur 6 de la boucle B₂ de liquide frigorigène rafraîchit l'air de l'habitacle. Le fluide en provenance de la pile 1 traverse alors, à la fois, les branches B₁₂ et B₁₃, les électrovannes 22 et 28 étant toutes deux ouvertes. Une partie du fluide caloporteur peut passer dans l'aérotherme 4, le moto-ventilateur 4a étant à l'arrêt puisque l'habitacle du véhicule ne requiert pas de chauffage. On peut ainsi régler le débit de fluide dans le condenseur 7. La vanne 20 se trouvant alors dans la position représentée à la figure 1, le fluide caloporteur ayant traversé la branche B₁₂, comme celui ayant traversé la branche B₁₃, revient par la ligne 14 à la pompe 12 et à la pile 1. Un organe séparateur de phase (non représenté) peut être monté en amont de la pompe 12, pour prévenir une entrée de fluide gazeux dans cette pompe.

Les appareils 8, 9, 10 du véhicule étant, au démarrage de ce véhicule, relativement froids même par temps chaud, un faible débit du fluide frigorigène dans l'évaporateur 6 suffit à climatiser l'habitacle. On peut alors commander l'ouverture de l'électrovanne 26 pour refouler vers la pile une partie du fluide de la boucle B₁ qui en sort, ou bien l'intégralité de ce fluide s'il n'est pas besoin de chauffer l'habitacle ou de refroidir le condenseur 7.

En fonctionnement stabilisé du véhicule, la pile 1 et les appareils 8, 9, 10 du véhicule exigent un refroidissement. Pour ce faire, le calculateur 30 commande la vanne 19 de manière à couper la branche 13 et à faire passer dans la turbine 3 tout le fluide venant de la pile 1. Dans le cas d'une turbine bi-étagée, comme celle représentée à la figure 1, on peut soutirer à la sortie d'un premier étage, amont, de la turbine une fraction (ou la totalité) du fluide caloporteur pour que cette fraction passe dans le condenseur 7, à travers l'électrovanne 28, avant de revenir dans la turbine 3 par la vanne 20, basculée par le calculateur 30 de manière à envoyer le fluide caloporteur qui sort du condenseur 7 dans un deuxième étage, aval, de la turbine 3. La vapeur soutirée est alors, suivant la présente invention, surchauffée dans le condenseur 7 par le fluide comprimé de la boucle B₂, avant la détente de ce dernier dans l'évaporateur 6. On accroît ainsi le rendement de la turbine 3 qui, suivant l'invention, fournit de l'énergie mécanique à un ou plusieurs des consommateurs embarqués dans le véhicule, comme on l'a vu plus haut (compresseur 11, pompe 12, moto-ventilateurs 4a et 5a, etc...).

S'il est besoin de chauffer l'habitacle en régime stabilisé du véhicule, le calculateur 30 commande l'ouverture de l'électrovanne 22 pour qu'une partie du fluide soutiré à la sortie de l'étage amont de la turbine 3 passe dans l'aérotherme 4 avant de venir balayer la pile par la ligne 14 et la pompe 12.

A la sortie de la turbine 3, la plus grande partie du fluide caloporteur est à l'état gazeux et à basse pression. Il revient à l'état liquide dans le condenseur 5 avant de passer dans la pompe 12 qui relève sa pression et le renvoie vers la pile 1 à refroidir.

Le fluide frigorigène à l'état gazeux qui sort des appareils 8, 9, 10 est refoulé à haute pression par le compresseur 11, dans le condenseur 7 où il réchauffe, comme on l'a vu plus haut, le fluide soutiré dans la turbine 3. Il passe ensuite dans le détendeur 18 qui abaisse sa pression avant de le laisser entrer dans l'évaporateur 6 où il sert à rafraîchir l'air de l'habitacle. Le fluide frigorigène vaporisé refroidit ensuite les appareils 8, 9, 10 après avoir traversé les détendeurs 15, 16, 17 respectivement. Entre le détendeur 18 et le compresseur 11 le fluide frigorigène de la boucle B₂ est normalement complètement vaporisé. On n'observe une évaporation partielle du fluide dans l'évaporateur 6 que si l'air de l'habitacle a besoin d'être rafraîchi.

Le calculateur 30 ajuste constamment, par exemple au moyen des électrovannes 22, 26 et 28, les débits de fluide dans'les boucles B₁ et B₂, en tant que de besoin.

Il apparaît maintenant que l'invention permet bien d'atteindre le but annoncé, à savoir assurer une gestion économique des transferts d'énergie thermique nécessaires à la régulation de la température de la pile à combustible et d'autres appareils exigeant un refroidissement, ainsi qu'à la régulation de la température de l'habitacle, avec récupération d'énergie mécanique utilisable dans le véhicule. La gestion est optimisée en outre par un couplage des deux boucles de fluide au niveau du condenseur 7, autorisant un transfert de chaleur d'une boucle à l'autre, favorable au relèvement du rendement de la turbine 3. La gestion est ainsi optimisée en ce que les fonctionnements des boucles sont étroitement adaptés aux conditions de fonctionnement du véhicule, en démarrage par temps froid ou chaud, ou en régime stabilisé.

En variante du mode de réalisation de l'invention représenté schématiquement à la figure 1, la turbine 3 pourrait être aussi simplement mono-étagée, si on peut se passer d'une surchauffe du fluide caloporteur dans le condenseur 7. On supprime alors les lignes qui, dans le mode de réalisation de la figure 1 permettent au soutirage de vapeur de passer dans ce condenseur pour revenir ensuite dans la turbine. Dans le cas de cette variante, le condenseur 7 pourrait être déplacé entre la pompe 12 et la pile 1, par exemple, afin de permettre à la boucle B₂ de fonctionner correctement.

On a représenté à la figure 2 du dessin annexé une variante de la partie A de la figure 1. Comme représentée cette partie comprend une vanne 29 à quatre voies permettant d'inverser sélectivement le sens de circulation du fluide frigorigène de la boucle B₂, dans les appareils 6 et 7 traversés par cette boucle.

Dans une première position, la vanne 29 établit un sens de circulation identique à celui illustré par la figure 1, les appareils 6 et 7 jouant alors les rôles d'évàporateur et de condenseur respectivement. Cette position de la vanne 29 est choisie par le calculateur 30 quand le véhicule roule en régime stabilisé.

Dans une deuxième position de la vanne 29, le sens de circulation du fluide dans ces appareils est inversé comme représenté à la figure 2, les appareils 6 et 7 jouant les rôles de condenseur et d'évaporateur, respectivement. Le fluide frigorigène sortant du compresseur 11 qui se condense alors dans l'appareil 6, dégage des calories qui chauffent l'habitacle du véhicule, la boucle B₂ fonctionnant alors en "pompe à chaleur". Après une détente dans le détendeur 18, le fluide s'évapore partiellement dans l'appareil 7, l'évaporation se poursuivant dans les appareils 8, 9, 10 avant que le compresseur 11 ne refoule le fluide à l'état gazeux vers l'appareil 6.

On a représenté à la figure 3 du dessin annexé une variante de la partie B du schéma de la figure 1, associée à la variante de la partie A de cette figure représentée à la figure 2. La variante de la figure 3 permet à l'aérotherme 4 de participer au refroidissement de la pile 1, quand cet aérotherme n'est pas utilisé pour chauffer l'habitacle du véhicule. Il sert alors de condenseur d'appoint pour évacuer un surplus de calories délivré par la pile. Pour ce faire l'aérotherme 4 est placé dans une branche B₁₄ de la boucle B₁, connectée entre l'entrée de la turbine 3 et la sortie du condenseur 5. Une électrovanne 21 est montée dans la branche B₁₄ en amont de l'aérotherme 4. Le calculateur 30 agit sur cette électrovanne 21 pour commander sélectivement l'alimentation de l'aérotherme 4 en fluide caloporteur. Un détendeur (non représenté) peut être monté en amont de l'aérotherme 4 pour que celui-ci reçoive le fluide sous une pression convenable. Une branche B₁₅ pourvue d'une électrovanne 23 commandée elle aussi par le calculateur 30, peut être prévue pour raccorder l'entrée du condenseur 5 à celle de l'aérotherme 4, pour permettre à ce dernier de jouer le rôle de condenseur auxiliaire du condenseur 5.

On a représenté schématiquement à la figure 4 un agencement préféré des appareils 4 et 6 précité, permettant de les utiliser sélectivement dans l'une quelconque des situations décrites ci-dessus, au refroidissement de la pile et/ou à la climatisation ou au chauffage de l'habitacle du véhicule.

Les deux organes 4 et 6 sont placés dans deux veines d'air adjacentes 40, 41 d'une unité de traitement d'air extérieur alimentée par un conduit d'admission 42 commun, équipé d'un ventilateur 43 d'aspiration d'air extérieur. Un volet 25 placé à la jonction du conduit 42 et des veines 40, 41 permet de partager le débit d'air entrant entre les deux veines, suivant un rapport prédéterminé. La veine 41 débite de l'air seulement dans l'habitacle alors qu'un volet 24 placé dans la veine 40, en aval de l'appareil 4, dirige l'air chauffé par l'appareil 4 vers l'intérieur de l'habitacle ou vers l'extérieur, selon qu'il s'agit de chauffer l'habitacle ou de refroidir la pile 1, respectivement. Le volet 24 peut aussi servir à répartir l'air de la veine 40 entre l'habitacle et l'extérieur. Il est clair qu'en agissant à la fois sur les positions des volets 24, 25 (réglées par le calculateur 30) on peut répartir de manière optimale l'air admis dans le conduit 42, entre l'habitacle et l'extérieur.

En variante du mode de réalisation de la figure 4, on pourrait disposer les appareils 4 et 6 en série plutôt qu'en parallèle, moyennant une adaptation correspondante des conduits et volets utilisés pour canaliser l'air extérieur passant sur ces appareils. De même, un ventilateur auxiliaire pourrait être monté en aval du volet 24, dans la veine d'air s'écoulant vers l'extérieur, pour réduire la puissance du ventilateur 43 et donc le bruit généré par ce ventilateur et perçu dans l'habitacle.

## Revendications

1. Véhicule automobile comprenant au moins un moteur électrique de propulsion, une pile à combustible (1) pour l'alimentation du moteur en énergie électrique, des moyens de régulation de la température de fonctionnement de ladite pile (1), et des appareils consommateurs d'énergie mécanique (4a, 5a, 11, 12),
**caractérisé en ce que** lesdits moyens de régulation comprennent un fluide caloporteur balayant ladite pile (1) et circulant en boucle (B₁), ladite boucle (B₁) comportant des moyens (3) pour convertir une partie de l'énergie thermique transportée par ledit fluide en une énergie mécanique sélectivement délivrée auxdits consommateurs d'énergie mécanique (4a, 5a, 11, 12).

2. Véhicule conforme à la revendication 1, **caractérisé en ce que** lesdits moyens de conversion (3) comprennent une turbine traversée par ledit fluide chauffé à l'état gazeux par ladite pile (1), ledit fluide passant ensuite dans un condenseur (5) disposé dans ladite boucle (B₁) entre ladite turbine (3) et ladite pile (1).

3. Véhicule conforme à la revendication 2, **caractérisé en ce que** qu'il comprend des moyens (30) pour commander sélectivement le passage du fluide caloporteur ayant balayé la pile (1) dans au moins une branche (B₁₂, B₁₃; B₁₄) de ladite boucle (B₁) court-circuitant ladite turbine (3) et ledit condenseur (5), lors d'une phase de démarrage dudit véhicule.

4. Véhicule conforme à la revendication 3, **caractérisé en ce que**, en phase de démarrage dudit véhicule par temps froid, lesdits moyens de commande (30) font passer ledit fluide dans un aérotherme (4) de chauffage de l'habitacle dudit véhicule, disposé dans l'une (B₁₁; B₁₄) desdites branches (B₁₂, B₁₃, B₁₄) court-circuitant ladite turbine (3).

5. Véhicule conforme à la revendication 4, **caractérisé en ce qu'**il comprend en outre des moyens pour rafraîchir l'air dudit habitacle par temps chaud, lesdits moyens comprenant un compresseur (11) et un évaporateur (6) traversés par un fluide frigorigène circulant en boucle (B₂),

6. Véhicule conforme à la revendication 5, **caractérisé en ce qu'**il comprend en outre un autre condenseur (7) traversé, d'une part, par une branche (B₁₃) de la boucle de fluide caloporteur court-circuitant sélectivement la turbine (3) et, d'autre part, par ladite boucle de fluide frigorigène (B₂), entre ledit compresseur (11) et ledit évaporateur (6),

7. Véhicule conforme à la revendication 6, **caractérisé en ce que**, pendant une phase de démarrage par temps chaud du véhicule, lesdits moyens de commande (30) établissent une circulation du fluide caloporteur dans ledit aérotherme (4) et/ou dans ledit autre condenseur (7),

8. Véhicule conforme à l'une quelconque des revendications 3 à 7, **caractérisé en ce que** ladite turbine (3) est bi-étagée et **en ce que**, en régime de fonctionnement stabilisé dudit véhicule, lesdits moyens de commande (30) établissent un soutirage du fluide circulant dans ladite turbine, à la sortie d'un premier étage de cette turbine, le fluide soutiré passant dans ledit condenseur (7) pour y être surchauffé par le fluide frigorigène comprimé qui sort dudit compresseur (11), le fluide soutiré étant ensuite renvoyé à l'entrée d'un deuxième étage de ladite turbine (3).

9. Véhicule conforme à la revendication 8, **caractérisé en ce que**, simultanément audit soutirage, lesdits moyens de commande (30) établissent sélectivement une circulation d'une fraction du fluide soutiré dans ledit aérotherme (4) pour chauffer l'air de l'habitacle dudit véhicule.

10. Véhicule conforme à l'une quelconque des revendications 5 à 9, **caractérisé en ce que** ladite boucle (B₂) de fluide frigorigène traverse en outre des appareils à refroidir (8, 9, 10) dudit véhicule.

11. Véhicule conforme à l'une quelconque des revendications 1 à 10, **caractérisé en ce qu'**il comprend un échangeur (2) traversé par le fluide caloporteur, en aval de ladite pile (1), pour y recueillir de l'énergie thermique produite par un équipement dudit véhicule.

12. Véhicule conforme à la revendication 11, **caractérisé en ce que** ledit équipement est un reformeur d'hydrogène associé à ladite pile (1).

13. Véhicule conforme à l'une quelconque des revendications 5 à 12, **caractérisé en ce qu'**il comprend des moyens (29) pour inverser le sens de circulation dudit fluide frigorigène dans ledit évaporateur (6) et ledit condenseur (7) traversés par ladite boucle (B₂) dudit fluide, lesdits moyens d'inversion (29) étant sélectivement actionnés par lesdits moyens de commande (30) pour chauffer, au niveau dudit évaporateur (6), l'air de l'habitacle normalement refroidi par ce dernier.

14. Véhicule conforme à l'une quelconque des revendications 4 à 13, **caractérisé en ce qu'**il comprend des moyens (21; 23) pour connecter ledit aérotherme (4) en parallèle sur ledit condenseur (5) de ladite boucle (B₂) de fluide caloporteur, lesdits moyens de commande actionnant sélectivement lesdits moyens (21; 23) quand l'air de l'habitacle dudit véhicule n'a pas besoin de chauffage.

15. Véhicule conforme à l'une quelconque des revendications 5 à 14, **caractérisé en ce que** ledit aérotherme (4) et ledit évaporateur (6) sont intégrés dans une même unité de traitement d'air extérieur, ladite unité étant munie de volets (24, 25) actionnés par lesdits moyens de commande (30) pour orienter sélectivement l'air extérieur vers l'un et/ou l'autre dudit aérotherme (4) et dudit évaporateur (6) et pour orienter sélectivement l'air traité vers l'habitacle du véhicule et/ou vers l'extérieur.
